# EUROPÄISCHE PATENTSCHRIFT

(11) **EP 1 178 281 B1**
(45) Veröffentlichungstag und Bekanntmachung des Hinweises auf die Patenterteilung: **07.06.2006**
(21) Anmeldenummer: 00116919.2
(22) Anmeldetag: 05.08.2000
(51) Int. Cl.: G01B 11/06

(54) **Verfahren zur kontinuierlichen Bestimmung der optischen Schichtdicke von Beschichtungen**
Method for the determination of the optical thickness of coatings
Procédé pour la mesure en continu de l'épaisseur optique de couches

(43) Veröffentlichungstag der Anmeldung: 06.02.2002
(73) Patentinhaber: Leybold Optics GmbH, 63775 Alzenau (DE)
(72) Erfinder: Beckmann, Rudolf, 63454 Hanau (DE); Zöller, Alfons, 63628 Bad Soden-Salmünster (DE); Hagedorn, Harro, D-60435 Frankfurt (DE); Dieter, Torsten, 63628 Bad Soden-Salmünster (DE)
(74) Vertreter: Hebing, Norbert

(56) Entgegenhaltungen:
- DE-A- 19 814 056
- FR-A- 2 589 578
- US-A- 4 320 967
- US-A- 5 289 266
- US-A- 5 416 574

## Beschreibung

Die Erfindung bezieht sich auf ein Verfahren zur kontinuierlichen Bestimmung der optischen Schichtdicke von Beschichtungen, die beidseitig auf die Kugelflächen von konkavkonvexen Linsen mit unterschiedlichen Kugelradien R₁ und R₂ aufgetragen werden.

Fotografische Verfahren zur Messung der Dicke von aufgedampften Schichten auf Glasscheiben oder dergleichen sind bekannt. In der DE-OS 36 27 232 wird ein Fotometer beschrieben, bei dem mittels eines Zerhackers eine Meßphase, eine Referenzphase und eine Dunkelphase erzeugt werden, wobei diese verschiedenen Phasen zeitlich versetzt sind, so daß für alle Phasen ein einziger Detektor vorgesehen sein kann. Dabei sind eine erste und eine zweite Lichtleitvorrichtung vorgesehen, zwischen deren jeweils einem Ende das zu messende Objekt angeordnet ist. Ferner ist eine dritte Lichtleitvorrichtung vorgesehen, die mit ihrem einen Ende dem Detektor gegenüberliegt und die mit ihrem anderen Ende mit einem Zerhacker verbunden ist, der auch mit dem anderen Ende der ersten Lichtleitvorrichtung in Verbindung steht. Dabei ist nachteilig, daß mehrere Lichtquellen angeordnet werden müssen.

In J. Roland Jacobsson: PROCEEDINGS, Volume 652, Thin film technologies II, 1986, Seite 24 werden funktionelle Zusammenhänge zwischen der Reflexion und der optischen Schichtdicke beschrieben. Die Untersuchungen werden dabei unter anderem an Schichtsystemen erläutert, bei denen es vorgesehen ist, abwechselnd mehrere Schichten von TiO₂ und MgF₂ auf ein Substrat aufzubringen. Diese funktionellen Zusammenhänge können für verschiedene Schichtmaterialien nach allgemein bekannten optischen Gesetzmäßigkeiten theoretisch berechnet werden.

Aus US-5289266 ist ein Verfahren bekannt wobei eine Schichtdicke aus Reflexionen von der Oberseite und der Unterseite der Schicht ermittelt wird.

Der Erfindung liegt die Aufgabe zugrunde, ein Verfahren zur kontinuierlichen Bestimmung der optischen Schichtdicke von Beschichtungen, die auf konkavkonvexen Linsen beidseitig aufgetragen werden, zu schaffen, das relativ einfach durchführbar ist, wobei auf Vergleichsmessungen an Vergleichssubstraten verzichtet werden kann. Das Verfahren soll auch dann vorteilhaft durchführbar sein, wenn auf den konkavkonvexen Linsen Schichtsysteme aus mehreren verschiedenen Schichten angeordnet werden.

Die der Erfindung zugrunde liegende Aufgabe wird durch ein Verfahren zur kontinuierlichen Bestimmung der optischen Schichtdicke von Beschichtungen, die beidseitig auf die Kugelflächen von konkavkonvexen Linsen mit unterschiedlichen Kugelradien R₁ und R₂ aufgetragen werden, gelöst, bei dem man jede konkavkonvexe Linse während des Beschichtungsvorganges außermittig mit einem Lichtstrahl beaufschlagt und die Reflexion oder Transmission an der konvexen Kugelfläche und an der konkaven Kugelfläche mit Fotodioden laufend mißt und die jeweilige optische Schichtdicke aus dem funktionellen Zusammenhang zwischen der Reflexion oder der Transmission und der optischen Schichtdicke ermittelt. Unter der optischen Schichtdicke ist das Produkt aus der geometrischen Schichtdicke und dem jeweiligen Brechungsindex, bezogen auf die gewählte Wellenlänge, zu verstehen. Als Beschichtung können ein- oder mehrschichtige Schichtsysteme eingesetzt werden. Bei dem Verfahren wird ein Lichtstrahl eingesetzt, der eine Breite von 0,1 mm bis 5 mm aufweist. Der funktionelle Zusammenhang zwischen der Reflexion oder der Transmission und der jeweiligen optischen Schichtdicke ist allgemein bekannt oder kann vorher berechnet werden, so daß aus den ermittelten Werten der Reflexion oder der Transmission die optische Schichtdicke ermittelt werden kann. Es hat sich in überraschender Weise gezeigt, daß die optische Schichtdicke an beiden Seiten der konkavkonvexen Linse während des Beschichtungsvorgangs kontinuierlich bestimmt und überwacht werden kann, wobei lediglich eine Lichtquelle erforderlich ist und auf Vergleichsmessungen an Vergleichssubstraten in vorteilhafter Weise verzichtet werden kann. Dies ist besonders dann vorteilhaft, wenn an der konvexen Kugelfläche und an der konkaven Kugelfläche unterschiedliche Schichten mit unterschiedlichen Schichtdicken als Schichtsysteme vorgesehen sind und die Beschichtung an beiden Seiten gleichzeitig erfolgt.

Eine bevorzugte Ausgestaltung der Erfindung besteht darin, daß die konkavkonvexe Linse im Randbereich mit einem Lichtstrahl beaufschlagt wird. Unter dem Randbereich ist derjenige Außenbereich zu verstehen, der sich in einer Breite von 1 bis 12 mm von der Außenkante der konkavkonvexen Linse zu deren Mitte erstreckt. Auf diese Weise läßt sich die Reflexion besonders vorteilhaft ermitteln, da die Differenz zwischen dem Reflexionswinkel an der konvexen Kugelfläche und dem Reflexionswinkel an der konkaven Kugelfläche im Randbereich der konkavkonvexen Linse größer ist als in unmittelbarer Nähe der Mitte der konkavkonvexen Linse. Auf diese Weise kann die Reflexion an beiden Kugelflächen der konkavkonvexen Linse durch zwei getrennte Fotodioden separat bestimmt werden. Daraus ergibt sich direkt die optische Schichtdicke auf beiden Kugelflächen. Wird der Lichtstrahl hingegen genau im Zentrum der konkavkonvexen Linse eingestrahlt, was nach der Erfindung nicht vorgesehen ist, so haben die Reflexionen an beiden Kugelflächen der konkavkonvexen Linse die gleiche Richtung, und es kann nur schwer eine getrennte Bestimmung der Reflexionen erfolgen. Letzteres ist aber eine unabdingbare Voraussetzung für eine erfolgreiche Überwachung des Beschichtungsprozesses. Eine getrennte Ermittlung der Reflexionen ist somit bei einseitiger Beaufschlagung mit dem Lichtstrahl im Randbereich einer konkavkonvexen Linse besonders vorteilhaft möglich, wenn die Krümmungsradien der beiden Kugelflächen unterschiedlich sind.

Gemäß einer weiteren bevorzugten Ausgestaltung der Erfindung wird der Lichtstrahl mit einem Zerhacker zerteilt oder vor dem Erreichen der Fotodioden durch einen Schmalbandfilter geleitet. Als Zerhacker kann beispielsweise eine Zerhacker-Scheibe eingesetzt werden. Dies ermöglicht eine vorteilhafte kontinuierliche gepulste Beaufschlagung des Lichtstrahls auf die konkavkonvexe Linse, was die Auswertung der Meßergebnisse erleichtert, sofern durch einen Beschichtungsprozeß ein starkes, diskontinuierliches Hintergrundleuchten vorhanden ist, das als starker Störfaktor neben der Reflexion des Lichtstrahls ebenfalls von der Fotodiode erfaßt wird. Das Hintergrundleuchten wirkt sich in der Regel nachteilig auf die genaue Auswertung von Meßergebnissen aus, sofern der Lichtstrahl unzerhackt auf die konkavkonvexe Linse geleitet wird. Somit lassen sich die nachteiligen Auswirkungen des Hintergrundleuchtens vermeiden.

Nach einer weiteren bevorzugten Ausgestaltung der Erfindung ist vorgesehen, daß der Lichtstrahl vor dem Auftreffen auf die konkavkonvexe Linse durch einen Strahlenteiler geleitet wird und die Intensität eines Teils des Lichtstrahles mit einer weiteren Fotodiode bestimmt wird. Auf diese Weise lassen sich Schwankungen bei der Lichtabgabe der Lichtquelle überwachen, die die Meßergebnisse verfälschen könnten.

Eine weitere Ausgestaltung der Erfindung besteht darin, daß der Lichtstrahl durch einen als Strahlenteiler eingesetzten Umlenkspiegel geleitet wird. Durch den Einsatz eines Umlenkspiegels kann der Lichtstrahl in seiner gewünschten Intensität besonders vorteilhaft aufgeteilt werden.

Gemäß einer weiteren bevorzugten Ausgestaltung der Erfindung wird als Lichtstrahl weißes Licht eingesetzt. Weißes Licht enthält im sichtbaren Bereich alle Wellenlängen im Bereich zwischen 390 nm und 770 nm. Dabei ist vorteilhaft, daß man die Messung der Reflexion oder Transmission auf spezielle Wellenlängen ausrichten kann, die meßtechnisch besonders vorteilhaft zu erfassen sind.

Eine weitere bevorzugte Ausgestaltung der Erfindung besteht darin, daß der Lichtstrahl senkrecht auf die konvexe Kugelfläche geleitet wird. Auf diese Weise läßt sich die Reflexion besonders einfach ermitteln, besonders dann, wenn beispielsweise nur eine kleine Vakuumkammer als Beschichtungsraum vorhanden ist und die Reflexionswinkel aus Platzgründen nur schwer ermittelt werden können. Dies ist besonders bei Beschichtungsanlagen der Fall, in welchen nur eine geringe Anzahl von konkavkonvexen Linsen gleichzeitig beschichtet werden.

Eine weitere Ausgestaltung der Erfindung besteht darin, daß ein Lichtstrahl mit einem Durchmesser von 0,1 mm bis 2 mm eingesetzt wird. In diesem Bereich lasen sich die Messungen der Reflexion oder der Transmission nahezu fehlerfrei durchführen.

Gemäß einer weiteren bevorzugten Ausgestaltung der Erfindung werden als konkavkonvexe Linsen Brillengläser eingesetzt. Die Brillengläser können aus Glas oder aus Kunststoff bestehen. Da bei der Beschichtung von Brillengläsern die jeweilige optische Schichtdicke der Beschichtungen sehr genau eingestellt werden muß, eignen sich Brillengläser in besonders vorteilhafter Weise als konkavkonvexe Linsen im vorgeschlagenen Verfahren.

Nach einer weiteren bevorzugten Ausgestaltung der Erfindung ist vorgesehen, daß der Lichtstrahl über einen verstellbaren Spiegel auf eine Fotodiode geleitet wird. Durch den Einsatz verstellbarer Spiegel können die Fotodioden gut positioniert mit dem Lichtstrahl beaufschlagt werden, was die Qualität der Meßergebnisse erhöht.

Eine weitere bevorzugte Ausgestaltung der Erfindung besteht darin, daß die Reflexion oder Transmission an der konvexen Kugelfläche oder an der konkaven Kugelfläche mit als Fotodioden angeordneten positionsempfindlichen Detektoren laufend gemessen wird. Der Einsatz positionsempfindlicher Detektoren als Fotodioden erhöht ebenfalls die Meßgenauigkeit des Verfahrens in vorteilhafter Weise.

Gemäß einer weiteren bevorzugten Ausgestaltung der Erfindung wird die Richtungsänderung des an der konvexen Kugelfläche reflektierten Lichtstrahles kontinuierlich gemessen und über ein Regelsystem kompensiert. Bedingt durch thermische Auswirkungen auf die im Beschichtungsraum zu behandelnden konkavkonvexen Linsen ist es möglich, daß die Krümmungsradien der konvexen Kugelfläche oder der konkaven Kugelfläche geringfügig verändert werden. Dies hat gleichzeitig eine Richtungsänderung des jeweiligen reflektierten Lichtstrahles zur Folge, die sich nachteilig auf die Messung der Reflexion oder der Transmission auswirken kann. Es ist daher vorteilhaft, diese Richtungsänderung laufend zu überwachen, was durch einen einfachen Regelkreis erfolgen kann. Abweichungen in der Richtungsänderung können dann umgehend korrigiert werden. Dabei kann eine Meß- und Regelapparatur eingesetzt werden, die direkt mit einer Verstellvorrichtung verbunden ist. Dies erhöht die Genauigkeit des Verfahrens zur kontinuierlichen Bestimmung der optischen Schichtdicke.

Eine weitere bevorzugte Ausgestaltung der Erfindung besteht darin, daß der Lichtstrahl von einer als Lichtquelle angeordneten Laserdiode abgestrahlt wird. Auf diese Weise lassen sich Bauteile einsparen. So kann dabei beispielsweise auf die Anordnung eines Zerhackers verzichtet werden. Darüber hinaus erfordert die Anordnung von Laserdioden nur einen sehr geringen Platzbedarf, was ebenfalls vorteilhaft ist.

Die Erfindung wird nachfolgend anhand der Zeichnung (Fig. 1 bis Fig. 3) näher und beispielhaft erläutert.
- Fig. 1: zeigt eine konkavkonvexe Linse im Querschnitt mit der konvexen Kugelfläche und der konkaven Kugelfläche;
- Fig. 2: zeigt eine Vakuumkammer im Querschnitt mit einer darin angeordneten konkavkonvexen Linse sowie einer außerhalb der Vakuumkammer positionierten Lichtquelle;
- Fig. 3: zeigt eine Vakuumkammer im Querschnitt mit einer darin angeordneten konkavkonvexen Linse sowie einer außerhalb der Vakuumkammer positionierten Lichtquelle, die in einem Bauteil integriert ist.

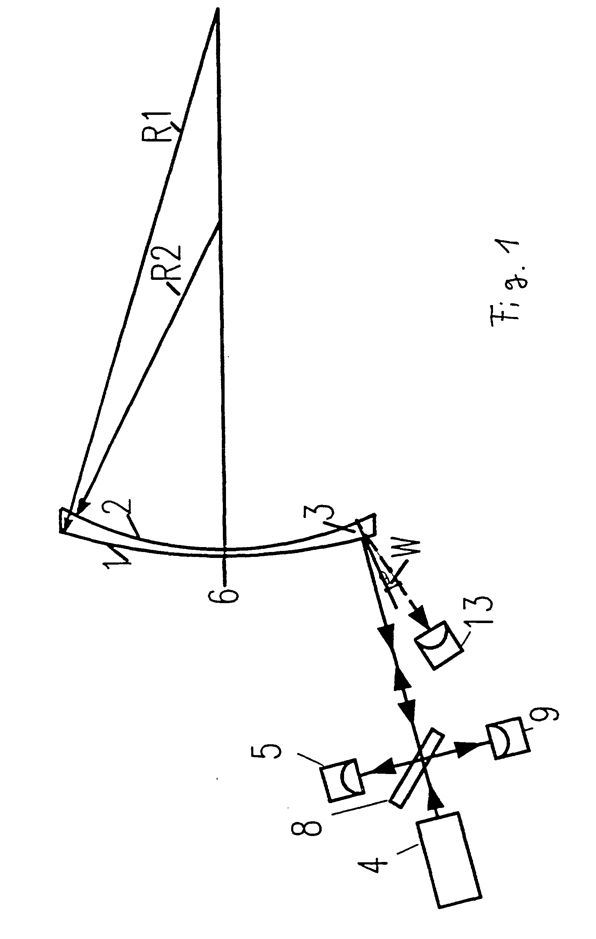

In Fig. 1 ist eine konkavkonvexe Linse im Querschnitt schematisch vereinfacht dargestellt, wobei auf eine Schraffur aus Gründen der Übersichtlichkeit verzichtet wurde. Die konkavkonvexe Linse weist eine konvexe Kugelfläche 1 mit einem Kugelradius R₁ auf. An der gegenüberliegenden Seite ist die konkavkonvexe Linse von einer konkaven Kugelfläche 2 mit einem Kugelradius R₂ begrenzt. Bei dem Verfahren zur kontinuierlichen Bestimmung der optischen Schichtdicke von Beschichtungen, die beidseitig auf die Kugelflächen von konkavkonvexen Linsen mit unterschiedlichen Kugelradien R₁ und R₂ aufgetragen werden, wird die konkavkonvexe Linse während des Beschichtungsvorgangs an einem Meßpunkt 3, der nicht mit der Mitte 6 der konkavkonvexen Linse zusammenfällt und in besonders vorteilhafter Weise im Randbereich der konkavkonvexen Linse gewählt wird, ausgehend von einer Lichtquelle 4 mit einem Lichtstrahl über einen Strahlenteiler 8 beaufschlagt. Durch den Strahlenteiler 8 wird der Lichtstrahl in zwei Teile geteilt. Der erste Teil des Lichtstrahls wird zur weiteren Fotodiode 9 geleitet, die zur Überwachung der Lichtquelle 4 dient. Der zweite Teil des Lichtstrahls trifft auf den im Randbereich der konkavkonvexen Linse liegenden Meßpunkt 3 senkrecht auf und wird zunächst an der konvexen Kugelfläche 1 reflektiert, wobei der reflektierte Lichtstrahl keine Richtungsänderung erfährt. Der an der konvexen Kugelfläche 1 durchtretende Lichtstrahl gelangt auf die konkave Kugelfläche 2 und wird an dieser reflektiert, wobei der reflektierte Lichtstrahl (gestrichelt dargestellt) gemäß dem Reflexionswinkel W eine Richtungsänderung erfährt. Der an der konkaven Kugelfläche 2 reflektierte Lichtstrahl wird zur Fotodiode 13 geleitet. Der an der konvexen Kugelfläche 1 reflektierte Lichtstrahl wird zur Fotodiode 5 geleitet. Den Meßwerten der Reflexion beziehungsweise Transmission an der konvexen Kugelfläche 1 und der konkaven Kugelfläche 2 lassen sich direkt Werte für die jeweiligen optischen Schichtdicken auf den Kugelflächen zuordnen, wobei man auf die bekannten funktionellen Zusammenhänge zurückgreift. Auf diese Weise lassen sich die optischen Schichtdicken während des Beschichtungsvorgangs auf der konvexen Kugelfläche 1 und der konkaven Kugelfläche 2 gleichzeitig kontinuierlich bestimmen, so daß der eigentliche Beschichtungsvorgang auf relativ einfache Weise überwacht und gegebenenfalls optimiert werden kann. Die reflektierten Lichtstrahlen können vor dem Erreichen der Fotodioden 5,13 gegebenenfalls durch Linienfilter geleitet oder phasenselektiv verstärkt werden (nicht dargestellt).

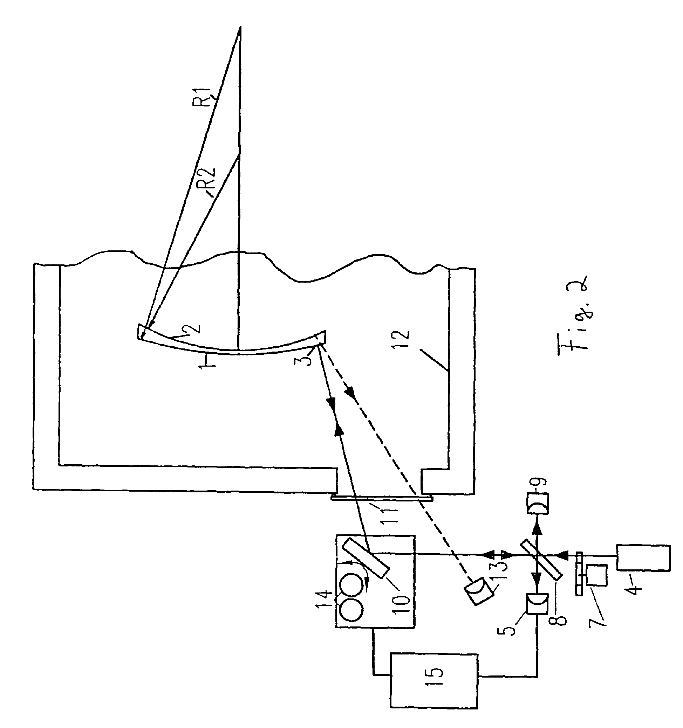

In Fig. 2 ist eine Vakuumkammer 12 im Querschnitt dargestellt, in welcher eine konkavkonvexe Linse angeordnet ist. In der Vakuumkammer 12 findet die beidseitige Beschichtung der konkavkonvexen Linse statt. Außerhalb der Vakuumkammer 12 ist eine Lichtquelle 4 angeordnet. Der Lichtstrahl wird ausgehend von der Lichtquelle 4 zu einem Zerhacker 7 geleitet, der als Zerhacker-Scheibe angeordnet ist. Der zerhackte Lichtstrahl gelangt anschließend zu einem Strahlenteiler 8, durch welchen der Lichtstrahl in zwei Teile aufgeteilt wird. Der erste Teil des Lichtstrahls wird zur weiteren Fotodiode 9 geleitet, die zur Überwachung der Lichtquelle 4 dient, die gelegentlichen Schwankungen in der Intensität des abgegebenen Lichtstrahls unterworfen sein kann. Der zweite Teil des Lichtstrahles gelangt über einen Umlenkspiegel 10 und ein Schauglas 11 in die Vakuumkammer 12 und trifft auf dem im Randbereich der konkavkonvexen Linse liegenden Meßpunkt 3 zunächst auf die konvexe Kugelfläche 1 auf. Der an der konvexen Kugelfläche 1 reflektierte Lichtstrahl gelangt über das Schauglas 11 und den Umlenkspiegel 10 sowie über den Strahlenteiler 8 direkt zur Fotodiode 5, die zur Bestimmung der Reflexion dient. Die in der Fotodiode 5 erfaßten Meßwerte werden anschließend nach einem bekannten funktionellen Zusammenhang optischen Schichtdicken zugeordnet. Auf die gleiche Weise wird die Reflexion des an der konkaven Kugelfläche 2 reflektierten Lichtstrahles (gestrichelt dargestellt) bestimmt, wobei dieser reflektierte Lichtstrahl der Fotodiode 13 zugeführt wird. Bedingt durch verfahrenstechnische Schwankungen kann es während des Betriebs zu einer Richtungsänderung des an der konvexen Kugelfläche 1 reflektierten Lichtstrahles kommen, so daß es vorteilhaft ist, diese Richtungsänderung kontinuierlich zu messen und über ein Regelsystem 14,15 zu kompensieren. An der Fotodiode 5 wird der Punkt des Auftreffens des reflektierten Lichtstrahls kontinuierlich überwacht. Die gemessenen Werte werden dabei der Meß- und Regelapparatur 15 zugeführt. Kommt es zu einer Richtungsänderung, so wird ein entsprechendes Signal von der Meß- und Regelapparatur zur Verstellvorrichtung 14 geleitet, die automatisch den Umlenkspiegel 10 in seiner Position derart verändert, daß die Richtungsänderung kompensiert wird. Dies kann mit Hilfe eines einzigen Regelkreises erfolgen. Der Umlenkspiegel 10 und die Verstellvorrichtung 14 können dabei in einem einheitlichen Vorrichtungsteil angeordnet werden, was durch das beide Teile umgebende Rechteck in Fig. 2 verdeutlicht wird. Als Fotodiode 5 kann in vorteilhafter Weise ein positionsempfindlicher Detektor angeordnet werden. Unter einem positionsempfindlichen Detektor ist dabei ein optisches Bauteil zu verstehen, das wie eine Fotodiode zur Messung der Lichtintensität dient und gleichzeitig die Position des Lichtstrahls auf der fotosensitiven Fläche messen kann. Durch die Kompensation von Richtungsänderungen ist in vorteilhafter Weise gewährleistet, daß der gesamte Anteil des reflektierten Lichtstrahles auch tatsächlich von der Fotodiode 5 erfaßt wird. Allgemein erfolgt die Lichtstrahlsausrichtung vor der eigentlichen Beschichtungsphase in der Vakuumkammer 12. Auf diese Weise lassen sich die Beschichtungsverfahren zur Beschichtung von konkavkonvexen Linsen in einer relativ unzugänglichen Vakuumkammer 12 auf relativ einfache Weise überwachen oder optimieren. Als konkavkonvexe Linsen können dabei in vorteilhafter Weise Brillengläser eingesetzt werden.

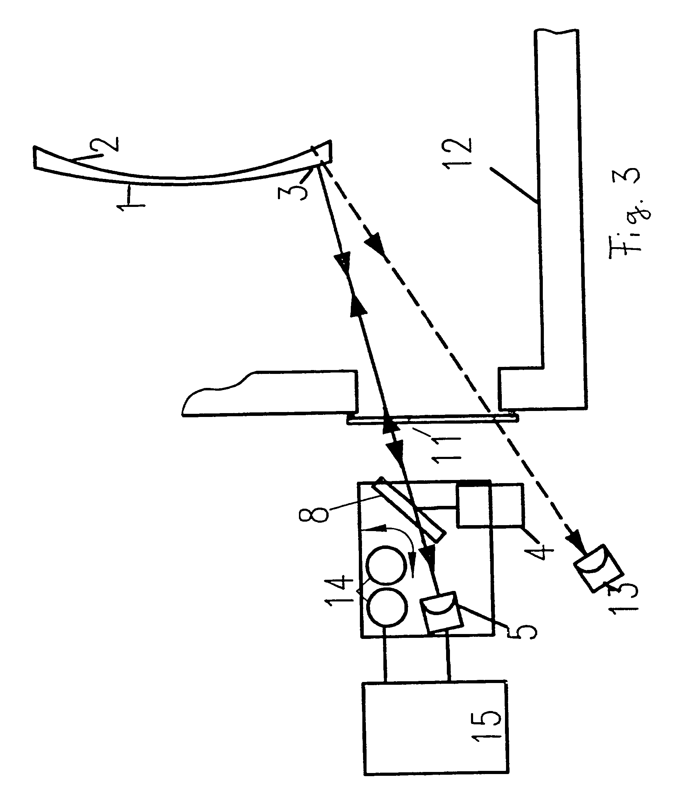

In Fig. 3 ist eine Vakuumkammer 12 im Querschnitt mit einer darin angeordneten konkavkonvexen Linse sowie einer außerhalb der Vakuumkammer 12 positionierten Lichtquelle 4 dargestellt, die in einem Bauteil integriert ist. Die Lichtquelle 4 ist hierbei als Laserdiode ausgestaltet. Da die Laserdiode in der Regel nur geringen Schwankungen in der Intensität des abgegebenen Lichtstrahls unterworfen ist, kann hierbei auf die Anordnung eines Zerhackers und eines Umlenkspiegels verzichtet werden. Die zur Messung der Reflexion des an der konvexen Kugelfläche 1 reflektierten Lichtstrahles angeordnete Fotodiode 5 ist zusammen mit der Lichtquelle 4, der Verstellvorrichtung 14 und des Strahlenteilers 8 in einer baulichen Einheit zusammengefaßt, was durch das diese Teile nahezu vollständig umgebende Rechteck in Fig. 3 vereinfacht und schematisch dargestellt ist. Die Meß- und Regelapparatur 15 sowie die zur Reflexion des an der konkaven Kugelfläche 2 reflektierten Lichtstrahls vorgesehene Fotodiode 13 liegen jedoch außerhalb dieser baulichen Einheit.

## Patentansprüche

1. Verfahren zur kontinuierlichen Bestimmung der optischen Schichtdicke von Beschichtungen, die beidseitig auf die Kugelflächen von konkavkonvexen Linsen mit unterschiedlichen Kugelradien R₁ und R₂ aufgetragen werden, bei dem man jede konkavkonvexe Linse während des Beschichtungsvorganges außermittig mit einem Lichtstrahl beaufschlagt und die Reflexion oder Transmission an der konvexen Kugelfläche (1) und an der konkaven Kugelfläche (2) mit Fotodioden (5,13) laufend mißt und die jeweilige optische Schichtdicke aus dem funktionellen Zusammenhang zwischen der Reflexion oder der Transmission und der optischen Schichtdicke ermittelt.

2. Verfahren nach Anspruch 1, bei dem die konkavkonvexe Linse im Randbereich mit einem Lichtstrahl beaufschlagt wird.

3. Verfahren nach Anspruch 1 oder Anspruch 2, bei dem der Lichtstrahl mit einem Zerhacker (7) zerteilt wird oder vor dem Erreichen der Fotodioden (5, 13) durch einen Schmalbandfilter geleitet wird.

4. Verfahren nach einem der Ansprüche 1 bis 3, bei dem der Lichtstrahl vor dem Auftreffen auf die konkavkonvexe Linse durch einen Strahlenteiler (8) geleitet wird und die Intensität eines Teils des Lichtstrahles mit einer weiteren Fotodiode (9) bestimmt wird.

5. Verfahren nach Anspruch 4, bei dem der Lichtstrahl durch einen als Strahlenteiler (8) eingesetzten Umlenkspiegel geleitet wird.

6. Verfahren nach einem der Ansprüche 1 bis 5, bei dem als Lichtstrahl weißes Licht eingesetzt wird.

7. Verfahren nach einem der Ansprüche 1 bis 6, bei dem der Lichtstrahl senkrecht auf die konvexe Kugelfläche (1) geleitet wird.

8. Verfahren nach einem der Ansprüche 1 bis 7, bei dem ein Lichtstrahl mit einem Durchmesser von 0,1 mm bis 2 mm eingesetzt wird.

9. Verfahren nach einem der Ansprüche 1 bis 8, bei dem als konkavkonvexe Linsen Brillengläser eingesetzt werden.

10. Verfahren nach einem der Ansprüche 1 bis 9, bei dem der Lichtstrahl über einen verstellbaren Spiegel (10) auf eine Fotodiode (5) geleitet wird.

11. Verfahren nach einem der Ansprüche 1 bis 10, bei dem die Reflexion oder Transmission an der konvexen Kugelfläche (1) oder an der konkaven Kugelfläche (2) mit als Fotodioden (5,13) angeordneten positionsempfindlichen Detektoren laufend gemessen wird.

12. Verfahren nach einem der Ansprüche 1 bis 11, bei dem die Richtungsänderung des an der konvexen Kugelfläche (1) reflektierten Lichtstrahls kontinuierlich gemessen und über ein Regelsystem (14,15) kompensiert wird.

13. Verfahren nach einem der Ansprüche 1 bis 5, 7 bis 12, bei dem der Lichtstrahl von einer als Lichtquelle (4) angeordneten Laserdiode abgestrahlt wird.

## Claims

1. A method for the continuous determination of the optical coat thickness of coatings which are applied to both sides of the spherical surfaces of concave-convex lenses with different spherical radii R₁ and R₂, wherein each concave-convex lens is loaded eccentrically with a light beam during the coating process, and the reflection or transmission is measured continuously on the convex spherical surface (1) and on the concave spherical surface (2) with photo-diodes (5, 13), and each optical coat thickness is determined from the functional relationship between the reflection or transmission and the optical coat thickness.

2. The method according to Claim 1, wherein the concave-convex lens is loaded with a light beam in the edge region.

3. The method according to Claim 1 or Claim 2, wherein the light beam is split with a chopper (7), or is guided through a narrow band filter before the photo-diodes (5, 13) are reached.

4. The method according to one of Claims 1 to 3, wherein the light bream is guided by a beam splitter (8) before it reaches the concave-convex lens, and the intensity of a proportion of the light bream is determined with a further photo-diode (9).

5. The method according to Claim 4, wherein the light beam is guided through a deflector mirror used as a beam splitter (8).

6. The method according to one of Claims 1 to 5, wherein white light is used as the light beam.

7. The method according to one of Claims 1 to 6, wherein the light beam is guided at right angles to the convex spherical surface (1).

8. The method according to one of Claims 1 to 7, wherein a light beam with a diameter of 0.1 mm to 2 mm is used.

9. The method according to one of Claims 1 to 8, wherein spectacles are used as concave-convex lenses.

10. The method according to one of Claims 1 to 9, wherein the light beam is guided through an adjustable mirror (10) onto a photo-diode (5).

11. The method according to one of Claims 1 to 10, wherein the reflection or transmission is measured on the convex spherical surface (1) or on the concave spherical surface (2) with position sensitive detectors arranged as photo-diodes (5, 13).

12. The method according to one of Claims 1 to 11, wherein the change of direction of the light beam reflected onto the convex spherical surface (1) is continuously measured and compensated for by a control system (14, 15).

13. The method according to one of Claims 1 to 5 and 7 to 12, wherein the light beam is radiated from a laser diode arranged as a light source (4).

## Revendications

1. Procédé de détermination en continu de l'épaisseur optique de couches de revêtement, que l'on applique bilatéralement sur les surfaces sphériques de lentilles concaves-convexes avec différents rayons de sphère R1 et R2, dans lequel pendant le processus de revêtement, on soumet chaque lentille concave-convexe de façon excentrée à un faisceau lumineux et on mesure en permanence la réflexion ou transmission sur la surface sphérique convexe (1) et sur la surface sphérique concave (2) à l'aide de photodiodes (5,13) et on détermine chaque fois l'épaisseur optique des couches à partir de la corrélation fonctionnelle entre la réflexion ou la transmission et l'épaisseur optique des couches.

2. Procédé selon la revendication 1, dans lequel la lentille concave-convexe est soumise à un faisceau lumineux dans la région marginale.

3. Procédé selon la revendication 1, dans lequel on divise le faisceau lumineux avec un hacheur (7) ou on le dirige à travers un filtre à bande étroite, avant l'atteinte des photodiodes (5, 13).

4. Procédé selon l'une quelconque des revendications 1 à 3, dans lequel avant son incidence sur la lentille concave-convexe, on dirige le faisceau lumineux à travers un séparateur de faisceaux (8) et en ce qu'on détermine l'intensité d'une partie du faisceau lumineux avec une autre photodiode (9).

5. Procédé selon la revendication 4, dans lequel on dirige le faisceau lumineux à travers un miroir de déviation utilisé en tant que séparateur de faisceaux (8).

6. Procédé selon l'une quelconque des revendications 1 à 5, dans lequel on utilise de la lumière blanche en tant que faisceau lumineux.

7. Procédé selon l'une quelconque des revendications 1 à 6, dans lequel on dirige le faisceau lumineux à la perpendiculaire sur la surface sphérique convexe (1).

8. Procédé selon l'une quelconque des revendications 1 à 7, dans lequel on utilise un faisceau lumineux d'un diamètre de 0,1 mm à 2 mm.

9. Procédé selon l'une quelconque des revendications 1 à 8, dans lequel on utilise des verres de lunettes en tant que lentilles concaves-convexes.

10. Procédé selon l'une quelconque des revendications 1 à 9, dans lequel on dirige le faisceau lumineux sur une photodiode (5), par l'intermédiaire d'un miroir réglable (10).

11. Procédé selon l'une quelconque des revendications 1 à 10, dans lequel on mesure en permanence la réflexion ou la transmission sur la surface sphérique convexe (1) ou sur la surface sphérique concave (2) avec des détecteurs sensibles à la position disposés en tant que photodiodes (5, 13).

12. Procédé selon l'une quelconque des revendications 1 à 11, dans lequel on mesure en continu le changement de direction du faisceau lumineux réfléchi sur la surface sphérique convexe (1) et on le compense par l'intermédiaire d'un système de réglage (14, 15).

13. Procédé selon l'une quelconque des revendications 1 à 5, 7 à 12, dans lequel le faisceau lumineux est rayonné par une diode laser, disposée en tant que source lumineuse (4).
